# DEMANDE DE BREVET EUROPEEN

(11) **EP 4 000 384 A1**
(43) Date de publication de la demande: **25.05.2022**
(21) Numéro de dépôt: 21206847.2
(22) Date de dépôt: 08.11.2021
(51) Int. Cl.: A01G 17/08, A01G 17/06

(54) **ORGANE DE SOLIDARISATION D'UN FIL DE PALISSAGE À UN SUPPORT**

(30) Priorité: 12.11.2020 FR 2011585
(71) Demandeur: S.C.D.C., 51270 Orbais-L'Abbaye (FR)
(72) Inventeur: FREGNAUX, Rémi, 51200 EPERNAY (FR)
(74) Mandataire: Hugues, Catherine

(57) **Abrégé**

[La présente invention concerne un organe de solidarisation (1) d'un fil de palissage à un support (2) tel qu'un piquet, se présentant sous la forme d'un fil métallique conformé pour présenter au moins une boucle (3) formant un berceau pour la réception du fil de palissage, ladite boucle (3) s'étendant entre une première extrémité (4) et une seconde extrémité (5) destinée à être fixée audit support (2) par des moyens d'assemblage. Il est caractérisé en ce qu'il comporte une portion en « V » (6) présentant un brin (7) relié à sa première extrémité (4) et un brin (8) relié à la boucle (3) ainsi qu'une portion en épingle à cheveux (9) présentant un brin (10) relié à la boucle (3) et un brin (11) relié à la seconde extrémité (5), et en ce que la portion en « V » (6) chevauche et repose contre le brin (10) de la portion en épingle à cheveux (9) relié à la boucle (3). ]

## Description

La présente invention a pour objet un organe de solidarisation d'un fil de palissage à un support tel qu'un piquet, se présentant sous la forme d'un fil métallique conformé pour présenter au moins une boucle formant un berceau pour la réception du fil de palissage, ladite boucle s'étendant entre une première extrémité et une seconde extrémité destinée à être fixée audit support par des moyens d'assemblage.

L'invention concerne par ailleurs un écarteur pour le palissage d'une plante grimpante.

De manière connue, le palissage consiste à conduire une plante sur une structure support en y attachant ses tiges et ses branches, le cas échéant à l'aide de liens, pour les orienter dans une direction déterminée. Une telle démarche a essentiellement pour but de contribuer à la qualité de la production en préservant les végétaux d'un éventuel contact avec le sol, tout en favorisant l'aération du feuillage et l'exposition des fruits au soleil. Par ailleurs, le fait de palisser des plantes, en particulier lorsqu'elles sont conduites en rangs, permet également de faciliter la mécanisation des interventions parfois nécessaires, telles que la taille, l'application de traitements, le désherbage, etc.

En guise de structure support, une solution classique consiste à recourir à une série de fils de palissage tendus au moyen d'organes de solidarisation dédiés, dont des piquets, installés entre les plantes disposées en rangs, ont préalablement été équipés. Au fur et à mesure de leur croissance, les jeunes pousses sont ensuite accrochées sur les fils de palissage, jusqu'à atteindre leur taille adulte et, le cas échéant, de préférence selon une configuration permettant de favoriser la fructification. De manière connue, la plupart des plantes cultivées de la sorte, telles que notamment la vigne, supposent après la récolte une taille destinée à supprimer au moins une partie des rameaux de la saison passée ainsi que le vieux bois et les éventuelles parties malades. Pour ce faire, il est d'usage de libérer les fils de palissage des organes de solidarisation les maintenant tendus le long des piquets, en vue à la fois de permettre une taille mécanisée et d'éviter qu'au cours d'une telle intervention la structure support ne soit détériorée par la machine utilisée. Ainsi, la mise en œuvre de telles structures supports de plantes grimpantes nécessite, pour un même cycle de culture, d'une part des opérations de fixation des fils de palissage sur les organes de solidarisation les reliant aux piquets et d'autre part des opérations de désassemblage des fils de palissage de ces mêmes organes de solidarisation.

A ce propos, différents modèles d'organes de solidarisation présentant une structure telle que décrite ci-dessus sont disponibles sur le marché à l'heure actuelle. Il a toutefois été constaté que bon nombre d'entre eux supposent l'intervention manuelle d'un ou plusieurs opérateurs pour la mise en place et le retrait des fils de palissage, ce qui non seulement pose problème au vu de la raréfaction actuelle de la main d'œuvre mais est également à l'origine de frais de main d'œuvre importants. D'autre part, les modèles existants dont la structure est compatible avec une mécanisation de ces étapes de mise en place/retrait des fils de palissage, comportent de manière classique une boucle ouverte, dont le fil de palissage risque d'être délogé de manière intempestive au cours de la croissance des plantes, notamment sous l'effet des mouvements des branches soumises à un fort vent, ce qui peut être à l'origine de dégâts concernant aussi bien la culture que la structure support.

Par conséquent, la présente invention a pour objectif de pallier ces inconvénients et de proposer un organe de solidarisation d'un fil de palissage à un support tel qu'un piquet, dont la structure est compatible avec une mécanisation des opérations consistant à y accrocher et décrocher un fil de palissage et qui d'autre part soit à même de garantir le maintien en place d'un fil de palissage engagé dans le berceau formé par la boucle qu'il comporte, tout au long de la période souhaitée.

A cet effet, l'invention a pour objet un organe de solidarisation du genre indiqué en préambule, caractérisé en ce que qu'il comporte une portion en « V » présentant un brin relié à sa première extrémité et un brin relié à la boucle ainsi qu'une portion en épingle à cheveux présentant un brin relié à la boucle et un brin relié à la seconde extrémité, et en ce que la portion en « V » chevauche et repose contre le brin de la portion en épingle à cheveux relié à la boucle.

Selon le cas, l'organe de solidarisation selon l'invention peut comprendre l'une ou plusieurs des caractéristiques suivantes :
- sa portion en « V » s'étend sensiblement dans le même plan que la boucle,
- sa portion en épingle à cheveux s'étend sensiblement dans le même plan que la boucle,
- sa portion en épingle à cheveux s'étend dans un plan formant un angle avec celui dans lequel s'étend ladite boucle,
- les deux brins que comporte la portion en « V » forment entre eux un angle compris entre environ 40° et environ 120°,
- sa portion en épingle à cheveux présente une portion rectiligne s'étendant entre ses deux brins et formant avec son brin relié à la seconde extrémité un angle compris entre environ 70° et environ 80°,
- sa seconde extrémité est rectiligne,
- sa première extrémité est rectiligne,
- sa première extrémité est recourbée pour présenter une forme de crochet.

L'invention concerne en outre un écarteur pour le palissage d'une plante grimpante, caractérisé en ce qu'il comporte deux organes de solidarisation tels que précédemment énoncés, dont les secondes extrémités respectives sont reliées entre elles par un moyen de fixation de l'écarteur sur un support tel qu'un piquet.

Les avantages découlant de la présente invention apparaîtront à la lecture de la description qui va suivre se rapportant à un exemple de réalisation illustré dans les dessins joints dans lesquels :
[Fig. 1] est une vue en perspective d'une variante de réalisation de l'organe de solidarisation selon l'invention,
[Fig. 2] est une vue de face de l'organe de solidarisation de la figure 1,
[Fig. 3] illustre un exemple d'implantation de l'organe de solidarisation de la figure 1 sur un support, et
[Fig. 4] est une vue d'une variante de réalisation d'un écarteur selon l'invention.

En référence aux figures, la présente invention concerne un organe de solidarisation 1 d'un fil de palissage (non illustré) à un support 2 tel que par exemple un piquet en bois, ou métal, connu en soi.

Dans la variante de réalisation illustrée, l'organe de solidarisation 1 est réalisé de manière classique à partir d'un fil métallique par exemple en acier, en acier galvanisé, en acier inoxydable, ou tout matériau équivalent lui conférant à la fois la rigidité nécessaire pour supporter le poids de la végétation accrochée sur le fil de palissage et une certaine flexibilité permettant sa déformation.

Il présente une boucle 3, formant un berceau pour la réception du fil de palissage, s'étendant entre une première extrémité 4 et une seconde extrémité 5, laquelle est destinée à être fixée au support 2 par des moyens d'assemblage appropriés.

Conformément à l'invention, l'organe de solidarisation 1 présente une structure spécifiquement étudiée pour permettre une insertion et une extraction mécanisée du fil de palissage dans le berceau que définit la boucle 3.

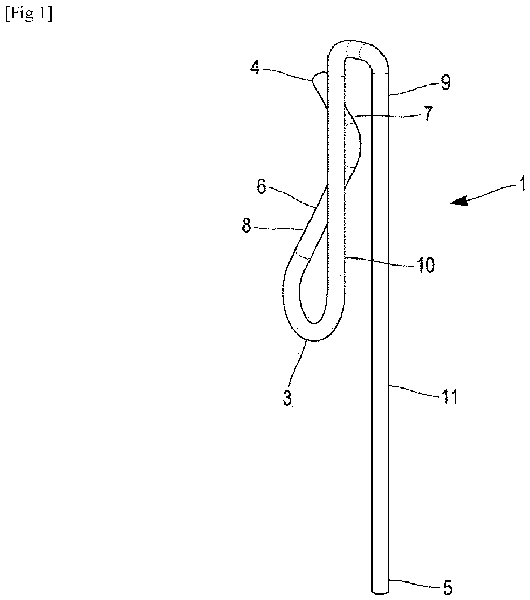

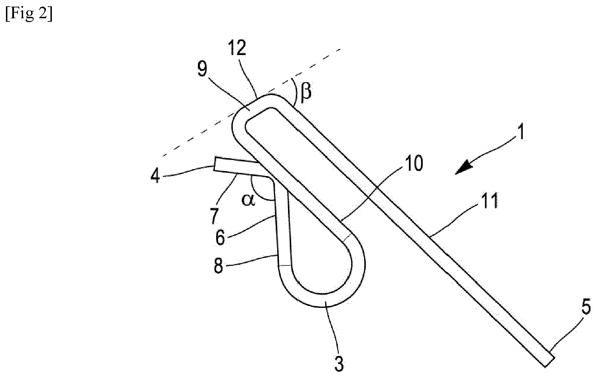

A cet effet, tel qu'il a été représenté aux figures 1 à 4, l'organe de solidarisation 1 comporte une portion en « V » 6, présentant un brin 7 relié à sa première extrémité 4 et un brin 8 relié à la boucle 3, ainsi qu'une portion en épingle à cheveux 9 présentant un brin 10 relié à la boucle 3 et un brin 11 relié à sa seconde extrémité 5. Par ailleurs, la portion en « V » 6 chevauche et repose contre le brin 10 de la portion en épingle à cheveux 9 relié à la boucle 3.

En somme, le fil métallique formant l'organe de solidarisation 1 comporte ainsi des sinusoïdes se recouvrant légèrement en formant une boucle 3 semi-fermée dans laquelle il est possible d'introduire et d'extraire aisément un fil de palissage aussi bien manuellement qu'au moyen d'une machine dédiée. En particulier, une telle structure permet d'effectuer l'étape de désengagement d'un fil de palissage de pieds de vigne, préalablement aux opérations de tirage de bois, de manière mécanisée et néanmoins respectueuse de l'intégrité structurelle du système de palissage dans son ensemble. Par ailleurs, une telle structure de l'organe de solidarisation 1, dans laquelle la boucle 3 est semi-fermée et la portion en « V » 6 et la portion en épingle à cheveux 9 se recouvrent partiellement, présente également l'avantage de permettre un maintien en place d'un fil de palissage dans son berceau en toutes circonstances, y compris en cas de grand vent.

Il convient encore de noter que dans la variante de réalisation illustrée, les portions en « V » 6 et en épingle à cheveux 9 s'étendent sensiblement dans le même plan que la boucle 3. Toutefois, d'autres conformations de l'organe de solidarisation 1 sont également envisageables, comme par exemple celle dans laquelle la portion en « V » 6 se situe sensiblement dans le plan de la boucle 3, tandis que la portion en épingle à cheveux 9 s'étend dans un plan formant un angle avec celui dans lequel s'étend la boucle 3, par exemple un angle droit.

Par ailleurs, dans le cadre de l'invention, il a également été prévu que les deux brins que comporte la portion en « V » forment entre eux un angle α compris entre environ 40° et environ 120°, par exemple 100° dans l'exemple illustré.

De manière similaire, la portion en épingle à cheveux 9 présente quant à elle une portion rectiligne 12 s'étendant entre ses deux brins 10, 11 et formant avec son brin 11 relié à la seconde extrémité 5 de l'organe de solidarisation 1 un angle β compris entre environ 70° et environ 80°, par exemple 75°.

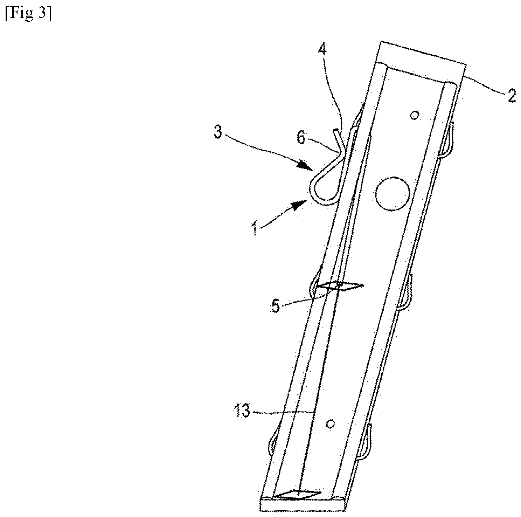

Comme il a été représenté aux figures 1 à 3, une variante de réalisation de l'organe de solidarisation 1 peut être prévue dans laquelle ses première et seconde extrémités sont rectilignes toutes les deux. Une telle structure convient par exemple pour fixer l'organe de solidarisation 1 directement sur un support tel qu'un poteau au sein duquel il est ancré au moyen d'une tige de fixation 13 (cf. fig. 3).

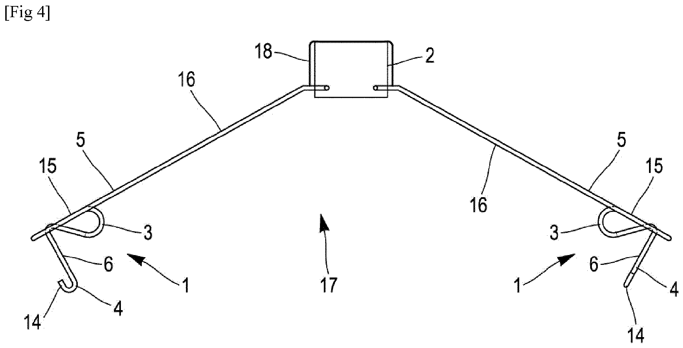

Une autre variante de réalisation peut également être envisagée dans laquelle la seconde extrémité 5 de l'organe de solidarisation 1 est rectiligne tandis que sa première extrémité 4 est recourbée pour présenter une forme de crochet 14 (cf. fig. 4). Dans ce cas, une paire d'organes de solidarisation 1 présentant une telle extrémité 4 en forme de crochet 14 pourront définir les portions d'extrémité 15 des branches 16 d'un écarteur 17 du type destiné au palissage de d'une plante grimpante, telle que notamment la vigne, dont la culture nécessite une opération de relevage des fils de palissage. Tel qu'illustré à la figure 4, les branches 16, ainsi que les deux organes de solidarisation 1, sont reliés entre eux par une portion 18 conformée pour permettre l'ancrage de l'écarteur 17 sur un support 2. Les crochets 14 quant à eux peuvent coopérer l'un avec l'autre en vue de maintenir dans une position relevée les branches 16 de l'écarteur 17.

## Revendications

1. Organe de solidarisation (1) d'un fil de palissage à un support (2) tel qu'un piquet, se présentant sous la forme d'un fil métallique conformé pour présenter au moins une boucle (3) formant un berceau pour la réception du fil de palissage, ladite boucle (3) s'étendant entre une première extrémité (4) et une seconde extrémité (5) destinée à être fixée audit support (2) par des moyens d'assemblage, ledit organe comportant une portion en « V » (6) présentant un brin (7) relié à sa première extrémité (4) et un brin (8) relié à la boucle (3) ainsi qu'une portion en épingle à cheveux (9) présentant un brin (10) relié à la boucle (3) et un brin (11) relié à la seconde extrémité (5), **caractérisé en ce que** les brins (7) et (8) de la portion en « V » (6) chevauchent et reposent contre le brin (10) de la portion en épingle à cheveux (9) relié à la boucle (3).

2. Organe de solidarisation (1) selon la revendication 1, **caractérisé en ce que** sa portion en « V » (6) s'étend sensiblement dans le même plan que la boucle (3).

3. Organe de solidarisation (1) selon l'une quelconque des revendications 1 ou 2, **caractérisé en ce que** ladite portion en épingle à cheveux (9) s'étend sensiblement dans le même plan que la boucle (3).

4. Organe de solidarisation (1) selon l'une quelconque des revendications 1 ou 2, **caractérisé en ce que** ladite portion en épingle à cheveux (9) s'étend dans un plan formant un angle α avec celui dans lequel s'étend ladite boucle (3).

5. Organe de solidarisation (1) selon la revendication 1, **caractérisé en ce que** les deux brins (7, 8) que comporte la portion en « V » (6) forment entre eux un angle compris entre environ 40° et environ 120°.

6. Organe de solidarisation (1) selon l'une quelconque des revendications précédentes, **caractérisé en ce que** la portion en épingle à cheveux (9) présente une portion rectiligne (12) s'étendant entre ses deux brins (10, 11) et formant avec son brin (11) relié à la seconde extrémité (5) un angle compris entre environ 70° et environ 80°.

7. Organe de solidarisation (1) selon l'une quelconque des revendications précédentes, **caractérisé en ce que** sa seconde extrémité (5) est rectiligne.

8. Organe de solidarisation (1) selon l'une quelconque des revendications précédentes, **caractérisé en ce que** sa première extrémité (4) est rectiligne.

9. Organe de solidarisation (1) selon l'une quelconque des revendications 1 à 4, **caractérisé en ce que** sa première extrémité (4) est recourbée pour présenter une forme de crochet (14).

10. Ecarteur (17) pour le palissage d'une plante grimpante, **caractérisé en ce qu'**il comporte deux organes de solidarisation (1) selon l'une quelconque des revendications précédentes dont les secondes extrémités (5) respectives sont reliées entre elles par un moyen de fixation (18) de l'écarteur (17) sur un support (2) tel qu'un piquet.
